# EUROPÄISCHE PATENTSCHRIFT

(11) **EP 3 132 132 B1**
(45) Veröffentlichungstag und Bekanntmachung des Hinweises auf die Patenterteilung: **31.10.2018**
(21) Anmeldenummer: 15706467.6
(22) Anmeldetag: 24.02.2015
(51) Int. Cl.: F02M 35/02, F02M 35/022, F02M 35/024, F02M 35/04, F02M 35/10, F02M 35/16, B62M 7/02, B62K 11/04

(54) **ANSAUGVORRICHTUNG MIT FORMAL INTEGRIERTEM LUFTFÜHRUNGSANSAUGKANAL**
INTAKE DEVICE WITH FORMALLY INTEGRATED AIR GUIDE INTAKE DUCT
DISPOSITIF D'ASPIRATION POURVU D'UN CANAL D'ASPIRATION ET D'ACHEMINEMENT D'AIR INTÉGRÉ

(30) Priorität: 15.04.2014 DE 102014207167
(43) Veröffentlichungstag der Anmeldung: 22.02.2017
(73) Patentinhaber: Bayerische Motoren Werke Aktiengesellschaft, 80809 München (DE)
(72) Erfinder: RÖSNER, Mathias, 80634 München (DE); OLBRZYMEK, Peter, 85247 Schwabhausen (DE)
(86) Internationale Anmeldenummer: PCT/EP2015/053816
(87) Internationale Veröffentlichungsnummer: WO 2015/158456

(56) Entgegenhaltungen:
- EP-A1- 2 527 179
- JP-A- S5 650 257
- JP-A- H08 318 887
- JP-A- 2001 088 762
- JP-A- 2007 168 530
- JP-B2- 3 609 121

## Beschreibung

Die Erfindung betrifft eine Ansaugvorrichtung für Verbrennungsluft mit formal integriertem Luftführungsansaugkanal bei einem Kraftrad, insbesondere bei einem Motorroller mit Triebsatzschwinge.

Bei herkömmlichen Krafträdern, insbesondere bei Motorrollern mit Triebsatzschwingen wird die Ansaugluft durch einen Schnorchel angesaugt, der als Zusatzbauteil an den Luftfilterkasten angeschlossen wird. Der Schnorchel wird fahrzeugabhängig hinter Verkleidungsteilen des Fahrzeugs versteckt verlegt, wobei die exakte Anordnung abhängig von den Gegebenheiten im jeweiligen Fahrzeug ist. Da eine Triebsatzschwinge bei verschieden designten Fahrzeugen verwendet werden kann, sind je nach Modell unterschiedliche Bauformen der Fahrzeuge die Regel. Der konstruktiv festgelegte Ansaugschnorchel lässt sich an diese formal unterschiedlichen Randbedingungen jedes Modells jedoch nur schlecht anpassen. Ferner ist die Position der Ansaugöffnung des Schnorchels dabei jeweils undefiniert und nicht eindeutig reproduzierbar. Die tatsächlich angesaugte Luft und ihre Qualität (Temperatur, Feuchtigkeit) wird jedoch von der Position der Ansaugöffnung beeinflusst. Ferner benötigt der Schnorchel vorab bei der Konstruktion vorzusehenden Bauraum, in den der Schnorchel bei der Montage dann fahrzeugabhängig aufwendig eingebracht werden muss. Ein derartiger Schnorchel ist nicht ideal im Gesamtfahrzeug integrierbar.

Nicht erfindungsgemäße Ansaugvorrichtungen auf diesem Gebiet der Technik sind beispielsweise aus den Dokumenten EP 2527 179 A1, JP 2007 168530 A, JP S56 50257 A, JP 2001 088762 A und JP 3 609121 B2 bekannt.

Der Erfindung liegt deshalb die Aufgabe zugrunde, eine Ansaugvorrichtung bereit zu stellen, die auf die Verwendung eines externen Ansaugschnorchels verzichten kann.

Diese Aufgabe wird durch die Merkmale des Anspruchs 1 gelöst, wobei eine Ansaugvorrichtung für Verbrennungsluft bei einem Kraftrad vorgeschlagen wird, mit einem Luftfilterkasten und einem Luftführungsansaugkanal, der sich von dem Luftfilterkasten in festgelegter Ausrichtung zu einem Ansaugraum erstreckt und zumindest abschnittsweise durch Teile des Luftfilterkastens gebildet ist.

Der an dem Luftfilterkasten vorzugsweise einteilig ausgebildete Luftführungsansaugkanal ersetzt den Schnorchel und ist formal in das Gesamtfahrzeug beziehungsweise die Triebsatzschwinge eines Motorrollers integriert.

Bei einer erfindungsgemäßen Ansaugvorrichtung für Verbrennungsluft eines Kraftrads mit Triebsatzschwinge ist als eine formal integrative Lösung der Erfindung vorgesehen, dass ein Seitenverkleidungsteil verwendet wird und der Luftführungsansaugkanal aus Teilen des Seitenverkleidungsteils und des Luftfilterkastens gebildet wird. Jedes Teil für sich stellt einen Teil des Luftführungsansaugkanals bereit, die zusammengesetzt bzw. montiert den Luftführungsansaugkanal und gegebenenfalls Teile des Luftfilterkastens bilden. Die zusammenzusetzenden Ränder könne über geeignete Dichtmittel abgedichtet werden, so dass keine Fremdluft angesaugt wird.

In einer bevorzugten Ausführung der Erfindung ist der Luftführungsansaugkanal im eingebauten Zustand gegenüber einer vertikalen Linie in einem Bereich von -45 Grad bis +45 Grad, weiter bevorzugt in einem Bereich von -15 Grad bis +15 Grad zum Boden hin ausgerichtet. Eine derartige zum Boden hin ausgerichtete Erstreckung des Luftführungsansaugkanals ermöglicht einen schwerkraftbedingten Rücklauf (Wasserabscheidung) von mit der Verbrennungsluft angesaugtem Wasser, beispielsweise bei Regen oder hoher Luftfeuchtigkeit, die im Luftführungsansaugkanal kondensieren kann.

Erfindungsgemäß ist ferner vorgesehen, dass der Luftführungsansaugkanal im Inneren ein Labyrinth aufweist, das zusammen mit der Verbrennungsluft angesaugte Feuchtigkeit vor Erreichen des Luftfilterkastens auffängt und rückführt. Erfindungsgemäß wird vorgeschlagen als Labyrinth Fächerelemente in dem Luftführungsansaugkanal auszubilden, an denen sich Feuchtigkeit sammelt uns schwerkraftbedingt wieder abtropft. Hierfür sind zusätzliche Leitungen bzw. Führungskanäle im Luftführungsansaugkanal vorgesehen, über die das von den Fächerelementen gesammelte Wasser abläuft.

Besonders günstig ist es, die Fächerelemente einteilig an dem Luftführungsansaugkanal auszubilden, so dass diese sich über die Lebensdauer nicht lösen oder die Strömung verändern.

Auch ist erfindungsgemäß in einem Ausführungsbeispiel vorgesehen, dass sich der Luftführungsansaugkanal in den Luftfilterkasten über eine vorbestimmte Länge hinein erstreckt. Der hineinragende Abschnitt des Luftführungsansaugkanals kann verklebt oder durch andere in der Technik bekannte Mittel abgedichtet befestigt werden. Die formale Integration in den Luftfilterkasten bringt den Vorteil, dass der Luftführungsansaugkanal bezüglich seiner Länge unabhängig von den übrigen Bauteilen des Fahrzeugs strömungstechnisch optimal dimensioniert werden kann.

Ebenfalls Bestandteil der Erfindung ist ein Motorroller mit Triebsatzschwinge und darin formal integriertem Ansaughohlraum, wobei an der Triebsatzschwinge eine Ansaugvorrichtung gemäß der obigen Beschreibung angeordnet ist. In einer günstigen Ausführungsform ist der Ansaugraum ein in der Triebsatzschwinge ausgebildeter Ansaughohlraum, zu dem sich der Luftführungsansaugkanal ausgehend von dem Luftfilterkasten erstreckt. Somit entsteht ein vollständig verknüpftes System, das formal ganzheitlich in die Triebsatzschwinge bzw. das Gesamtfahrzeug integriert ist, ohne das Anpassungen je nach Modell nötig wären.

Alle oben beschriebenen Merkmale sind beliebig kombinierbar, soweit dies technisch möglich ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Seitenansicht einer erfindungsgemäßen Ansaugvorrichtung in einer ersten Ausführung; und
- Fig. 2: eine Seitenansicht einer erfindungsgemäßen Ansaugvorrichtung in einer zweiten Ausführung.

Gleiche Bezugszeichen benennen gleiche Teile in allen Figuren.

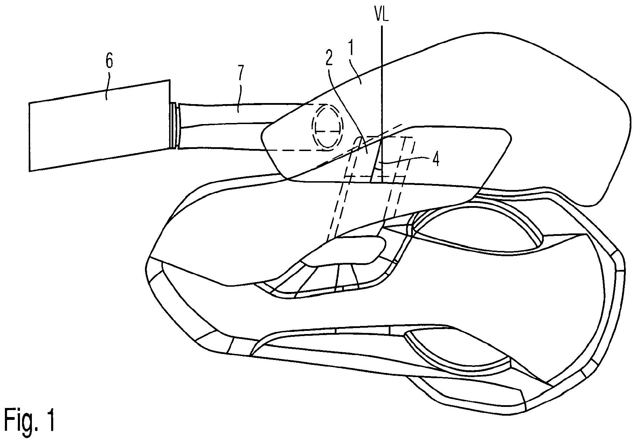

In Figur 1 ist eine Seitenansicht einer in ein Fahrzeug integrierten Ansaugvorrichtung gezeigt. Die Ansaugvorrichtung weist einen Luftfilterkasten 1 und ein Luftführungsansaugkanal 2 auf, der sich von dem Luftfilterkasten 1 in einer Ausrichtung gegenüber einer vertikalen Linie VL mit einem Winkel 4 von +15 Grad zu einem Ansaugraum im Fahrzeuginneren erstreckt und abschnittsweise durch Teile des Luftfilterkastens 1 gebildet ist. Der Luftführungsansaugkanal 2 wird nicht nur teilweise durch den Luftfilterkasten 1 gebildet, sondern erstreckt sich auch in ihn hinein. In der gezeigten Ausführung sind der Luftfilterkasten 1 und der Luftführungsansaugkanal 2 einteilig ausgebildet. Die vom Motor 6 angesaugte Verbrennungsluft verlässt den Luftfilterkasten 1 über eine Verbindungsleitung 7 zum Motor 6.

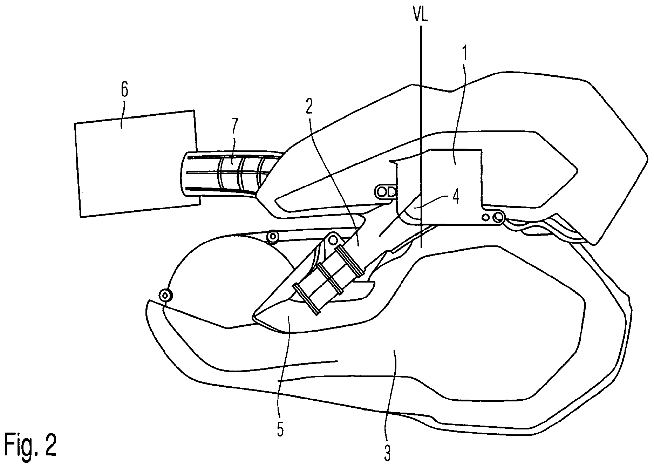

In Figur 2 ist eine Seitenansicht einer weiteren erfindungsgemäßen Ansaugvorrichtung in einem zweiten Ausführungsbeispiel gezeigt. Der Luftführungsansaugkanal 2 erstreckt sich von dem Luftfilterkasten 1 in einer Ausrichtung gegenüber einer vertikalen Linie VL mit einem Winkel 4 von +45 Grad zu einem Ansaughohlraum 5, der in der Triebsatzschwinge 3 gebildet ist.

Im Inneren des Luftführungsansaugkanal 2 sind in beiden Ausführungen nach Figuren 1 und 2 nicht explizit dargestellte Fächerelemente vorgesehen, die ein Labyrinth zur Wasserabscheidung aus der angesaugten Verbrennungsluft bilden.

Die Erfindung beschränkt sich in ihrer Ausführung nicht auf die vorstehend angegebenen bevorzugten Ausführungsbeispiele. Beispielsweise sind der Luftfilterkasten und der Luftführungsansaugkanal vorzugsweise aus demselben Material gebildet.

## Patentansprüche

1. Ansaugvorrichtung für Verbrennungsluft bei einem Kraftrad mit einer Triebsatzschwinge, mit einem Luftfilterkasten (1) und einem Luftführungsansaugkanal (2), der sich von dem Luftfilterkasten (1) in festgelegter Ausrichtung zu einem Ansaugraum erstreckt und zumindest abschnittsweise durch Teile des Luftfilterkastens (1) gebildet ist, **dadurch gekennzeichnet, dass**
der Luftführungsansaugkanal (2) im Inneren ein Labyrinth aufweist, das ausgebildet ist, angesaugte Feuchtigkeit vor Erreichen des Luftfilterkastens (1) aufzufangen, wobei
das Labyrinth durch Fächerelemente gebildet ist und in dem Luftführungsansaugkanal (2) Führungskanäle vorgesehen sind, die für einen Ablauf von durch die Fächerelemente gesammeltem Wasser ausgebildet sind, wobei die Triebsatzschwinge (3) bei Verwendung der Ansaugvorrichtung mindestens ein Seitenverkleidungsteil aufweist und der Luftführungsansaugkanal (2) formal in die Triebsatzschwinge (3) integriert aus Teilen des Seitenverkleidungsteils und des Luftfilterkastens (1) gebildet ist.

2. Ansaugvorrichtung nach dem vorigen Anspruch, **dadurch gekennzeichnet, dass** der Luftführungsansaugkanal (2) im eingebauten Zustand gegenüber einer vertikalen Linie (VL) in einem Bereich von -45 Grad bis +45 Grad zum Boden hin ausgerichtet ist.

3. Ansaugvorrichtung nach einem der vorigen Ansprüche, **dadurch gekennzeichnet, dass** der Luftführungsansaugkanal (2) im eingebauten Zustand gegenüber einer vertikalen Linie (VL) in einem Bereich von -15 Grad bis +15 Grad zum Boden hin ausgerichtet ist.

4. Ansaugvorrichtung nach Anspruch 1, **dadurch gekennzeichnet, dass** die Fächerelemente einteilig an dem Luftführungsansaugkanal (2) ausgebildet sind.

5. Ansaugvorrichtung nach einem der vorigen Ansprüche, **dadurch gekennzeichnet, dass** sich der Luftführungsansaugkanal (2) in den Luftfilterkasten (1) über eine vorbestimmte Länge hinein erstreckt.

6. Motorroller mit Triebsatzschwinge und darin formal integriertem Ansaughohlraum, wobei an der Triebsatzschwinge (3) eine Ansaugvorrichtung nach zumindest einem der Ansprüche 1 - 5 angeordnet ist.

7. Motorroller nach dem vorigen Anspruch, **dadurch gekennzeichnet, dass** sich der Luftführungsansaugkanal (2) ausgehend von dem Luftfilterkasten (1) zu dem Ansaughohlraum (5) erstreckt.

## Claims

1. An intake device for combustion air in a motorcycle with a drive assembly swing arm, with an air filter box (1) and an air guide intake duct (2) which extends from the air filter box (1) in a fixed orientation to an intake space and is formed at least in portions by parts of the air filter box (1), **characterised in that**
the air guide intake duct (2) has in its interior a labyrinth which is designed to collect sucked-in moisture before reaching the air filter box (1), wherein
the labyrinth is formed by fan elements, and guide ducts are provided in the air guide intake duct (2), which guide ducts are designed to discharge water collected by the fan elements, the drive assembly swing arm (3) when the intake device is used having at least one side trim part and the air guide intake duct (2) being formed, formally integrated in the drive assembly swing arm (3), from parts of the side trim part and of the air filter box (1).

2. An intake device according to the preceding claim, **characterised in that** the air guide intake duct (2) in the installed state is oriented towards the ground in a range from -45 degrees to +45 degrees relative to a vertical line (VL).

3. An intake device according to one of the preceding claims, **characterised in that** the air guide intake duct (2) in the installed state is oriented towards the ground in a range from -15 degrees to +15 degrees relative to a vertical line (VL).

4. An intake device according to Claim 1, **characterised in that** the fan elements are formed in one part on the air guide intake duct (2).

5. An intake device according to one of the preceding claims, **characterised in that** the air guide intake duct (2) extends into the air filter box (1) over a predetermined length.

6. A motor scooter with a drive assembly swing arm and an intake cavity formally integrated therein, wherein an intake device according to at least one of Claims 1 - 5 is arranged on the drive assembly swing arm (3).

7. A motor scooter according to the preceding claim, **characterised in that** the air guide intake duct (2) extends starting from the air filter box (1) to the intake cavity (5).

## Revendications

1. Dispositif d'aspiration de l'air comburant d'une moto équipée d'un bras oscillant moteur ayant un boîtier de filtre à air (1) et un canal d'aspiration et de guidage d'air (2) s'étendant du boîtier de filtre à air (1) selon une orientation fixe vers la chambre d'aspiration et qui est formé moins en partie par des pièces du boîtier de filtre à air (1),
dispositif **caractérisé en ce que**
- le canal d'aspiration et de guidage d'air (2) a intérieurement un labyrinthe pour recueillir l'humidité aspirée avant d'atteindre le boîtier de filtre à air (1), dans lequel
- le labyrinthe est formé par des éléments de cloison, des canaux de guidage étant prévus dans le canal d'aspiration et de guidage (2) pour évacuer l'eau collectée par les éléments de cloison,
- le bras oscillant moteur (3) dans son application avec un dispositif d'aspiration comporte au moins une pièce d'habillage latérale, le canal d'aspiration et de guidage d'air (2) étant intégré par la forme dans le bras oscillant moteur (3) à partir de la pièce d'habillage latérale et du boîtier de filtre à air (1).

2. Dispositif d'aspiration selon la revendication précédente,
**caractérisé en ce que**
le canal d'aspiration et de guidage d'air (2), à l'état installé par rapport à une ligne verticale (VL), fait un angle compris entre - 45 degrés et + 45 degrés par rapport au sol.

3. Dispositif d'aspiration selon l'une des revendications précédente,
**caractérisé en ce que**
le canal d'aspiration et de guidage d'air (2), à l'état installé, par rapport à une ligne verticale (VL), se situe dans une plage comprise entre - 15 de degrés jusqu'à + 15 degrés par rapport au sol.

4. Dispositif d'aspiration selon la revendication 1,
**caractérisé en ce que**
les éléments de cloison sont en une seule pièce avec le canal d'aspiration et de guidage d'air (2).

5. Dispositif d'aspiration selon l'une des revendications précédentes,
**caractérisé en ce que**
le canal d'aspiration et de guidage d'air (2) s'étend dans le boîtier de filtre à air (1) sur une longueur prédéfinie.

6. Moto équipée d'un bras oscillant moteur intégrant par la forme une chambre d'aspiration et le bras oscillant (3) a un dispositif d'aspiration selon au moins l'une des revendications 1 à 5.

7. Moto équipée selon la revendication précédente,
**caractérisée en ce que**
le canal d'aspiration et de guidage d'air (2) s'étend à partir du boîtier de filtre à air (1) jusqu'à la chambre d'aspiration (5).
